# EUROPEAN PATENT APPLICATION

(11) **EP 4 368 428 A1**
(43) Date of publication of application: **15.05.2024**
(21) Application number: 22206522.9
(22) Date of filing: 10.11.2022
(51) Int. Cl.: B60J 10/16, B60J 10/75, B60J 10/50

(54) **SEALING LIP AND SEALING STRAND**

(71) Applicant: Cooper Standard GmbH, 88131 Lindau (DE)
(72) Inventor: UEDA, Tosi Haijme Rafael, Nuneaton CV10 0FL (GB)
(74) Representative: Witte, Weller & Partner Patentanwälte mbB

(57) **Abstract**

An automotive sealing lip for a sealing strand, the sealing lip for providing a sealing line extending in a first direction against a sliding element such as a sliding window, the sealing lip being configured to be elastically pressed against the sliding element, the sealing lip having a lip body section which is configured to be oriented with respect to a surface of the sliding element at an acute lip angle, and the sealing lip comprising a first material selected from one of a rubber elastomer or a thermoplastic elastomer, the first material having a flexural Young Modulus from 100 MPa to 12,000 MPa.

## Description

The present invention relates to an automotive sealing lip for a sealing strand, and to a sealing strand for sealing a sliding window against a window frame.

In the field of automotive sealings, a sealing arrangement for a sliding window is well known, particularly for a sliding window of a door of the vehicle.

The sliding window is guided and sealed at its front and rear edges by guide arrangements which allow to guide the sealing window in an up and down direction, for example. In addition, such a sealing arrangement includes a header sealing which is engaged by the upper edge of the sliding window in the closed position thereof.

Further, the sealing arrangement includes an inner waist line sealing and an outer waist line sealing. The inner and outer waist line sealings have essentially two purposes. In the closed position of the sliding window, the outer waist line sealing statically prevents the entry of water and dirt into the interior of the door, for example. Similarly, the inner waist line sealing seals the inner surface of the window against entry of fluids or dirt into the interior of the door.

On the other hand, the waist line sealings have the function to dynamically seal the window surface during upward and downward movements of the window. The outer and inner waist sealings, also known as outer and inner waist belts, are typically made of rubber elastomer or thermoplastic elastomer material. On the other hand, some designs of inner and outer waist sealings tend to create noise during upward and downward movements of the sliding window. The noise which is generated at the interface between the glass (or another hard) surface of the sliding element (particularly sliding window) and the sealing during relative movements thereof, is typically a so-called squeak noise. The squeak noise may be generated due to a so-called stick & slip phenomenon. This phenomenon is expressed by energy accumulation and divergence due to differences in static and dynamic friction coefficients (COF).

On the other hand, the squeak noise can be produced by the so-called sprag & slip phenomenon. This phenomenon is caused by the instability of the geometry of the sealing and boundary conditions.

The stick & slip phenomenon is typically addressed by decreasing the difference of the static and dynamic friction coefficients, e.g. by applying flock material to the contact surface of the sealing.

Document US 10,864,808 B2 relates to an outer weatherstrip formed of a thermoplastic elastomer fitted to an upper edge portion of a door panel of an automobile door, for sealing a space between the door panel and a door glass, the weatherstrip includes a main body consisting of a vehicle interior-side side wall, a top wall, and a vehicle exterior-side side wall, and a seal lip protruding from the vehicle interior-side side wall to the door glass side. A plasticizer-rich layer containing a higher proportion of a plasticizer component compared to the plasticizer component contained in the thermoplastic elastomer forming seal lip is formed on a side of the seal lip adapted to abut on the door glass.

Document JP 4331772 A relates to a compressed and deformed double-layered sealing lip for improving a sag resistance.

Document JP 2002-254933 A relates to a door belt line weather strip of high durability and stable cutwater property in moving up and down the door glass of an automobile door. A root part of a lip and a door glass sealing part of the lip are made of different resin materials in the weather strip, and the resin material for the root part of the lip has a smaller compression set and a lower hardness those that of the material of the sealing part of the lip.

It is an object of the present invention to provide an improved automotive sealing lip and an improved sealing strand for sealing a sliding window.

The above object is solved by an automotive sealing lip for a sealing strand, the sealing lip for providing a sealing line extending in a first direction against a sliding element such as a sliding window, wherein the sealing lip is configured to be elastically pressed against the sliding element, wherein the sealing lip has a lip body section which is configured to be oriented with respect to a surface of the sliding element at an acute lip angle, and wherein the sealing lip comprises a first material selected from one of a rubber elastomer or a thermoplastic elastomer, the first material having a flexural Young modulus from 100 MPa to 12,000 MPa.

Further, the above object is achieved by a sealing strand for sealing a sliding window against a window frame, the sealing strand extending along a first direction and defining a second direction which is essentially perpendicular to the first direction, the first and second directions being essentially parallel to a window plane of the sliding window when the sealing strand is mounted to the window frame, the sealing strand comprising a mounting portion for mounting the sealing strand to a frame portion of the window frame, and a sealing portion which comprises at least one sealing lip of the present disclosure.

The use of the first material having the flexural Young Modulus from 100 MPa to 12,000 MPa results in an increase in the lip stiffness relative to glass movements (or movements of a sliding element), thus mitigating the risk of undesirable noise, particularly squeak noise as described above.

The first material, due to its flexural Young Modulus, has a non-flexing behavior during up and down movements of the sliding element (e.g. a sliding window). Therefore, during such up and down movements, there will be essentially no elastic deformation of the lip. Therefore, squeak noises can be drastically reduced.

Further, the first material can be provided at reduced costs.

The flexural Young Modulus is preferably in a range from 1000 MPa to 12,000 MPa, particularly in a range from 1000 to 3000 MPa, and in another preferred embodiment in a range from 5000 MPa to 12,000 MPa, and particularly preferred from 8000 MPa to 12,000 MPa.

The flexural Young Modulus is measured on the basis of the Standard ISO 178.

The acute lip angle is preferably in a range from 2.5° to 25°. It is particularly preferred if the acute lip angle is in a range from 10° to 20°, particularly preferred from 12° to 18°.

The acute lip angle is established at a nominal glass position (or nominal position of a sliding element) in a third direction which is a direction perpendicular to a plane of the sliding element.

The sealing strand of the present disclosure is preferably an inner waist belt or weather strip, but can also be used as an outer weather strip or waist sealing.

The sealing strand is preferably an extruded sealing strand. Preferably, the mounting portion and the sealing portion are co-extruded in one extrusion stage.

The sealing strand for sealing a sliding window against a window frame is provided with the inventive sealing lip, so that squeaking noises can be reduced during up and down movements of the sliding window. Further, high sealing performances can be achieved.

Therefore, the object of the present invention is achieved in full.

In a preferred embodiment, the lip body section of the automotive sealing lip has a body length in the range from 7 mm to 40 mm, particularly in a range from 10 to 25 mm.

Further, it is preferred if the lip body section has an average body thickness in the range from 0.8 mm to 5 mm, particularly in a range from 1 mm to 3 mm.

Although the body thickness is preferably constant, it may vary in some embodiments, in which case the average body thickness applies.

Further, although the lip body section can be slightly curved, it is preferably formed as an essentially straight body section.

With the above parameters, the objects of the invention can be achieved with good results.

It is particularly preferred if the first material is a material selected from the group consisting of: ethylene propylene diene monomer (EPDM), polyacetal (POM), polyamide (PP), polytetrafluoroethylene (PTFE), ultrahigh-molecular-weight polyethylene (UHMWPE), polypropylene (PP), polyolefin, polyvinyl chloride (PVC), polycarbonate (PC), styrene based materials, particularly SAN, ASA, ABS, PS, polyurethane (PUR), polymethyl methacrylate (PMMA), polybutylene terephthalate (PBT), and acrylonitrile styrene acrylate (ASA).

Any of the above-mentioned materials can be provided with the particular range of the flexural Young Modulus from 100 MPa to 12,000 MPa.

Particularly, it is preferred if PP is used as the first material, specifically in a so-called extrusion grade.

In a generally preferred embodiment, the first material is a foamed material.

The foamed material is preferably produced by an incorporation of physical or chemical blowing agents, or a master batch of both, through a dosing equipment in the elastomer matrix. The foamed material provides the high flexural Young Modulus from 100 MPa to 12,000 MPa at low weight.

In another preferred embodiment, the first material includes microspheres.

Particularly, the microspheres can be formed as so-called thermoexpandable microspheres which are used for foaming the material.

Particularly, such microspheres are like balloons in an EVA polymer shell. In the inside of the balloons there are alkanes gases which have a low boiling point and which expand at high temperature.

A master batch which is incorporated into the elastomer matrix can be a mixture of microspheres or microcapsules and an EVA matrix, which is mixed as a master batch and then added to the first material.

Further, the first material can be foamed by a chemical agent such as AZ/ADC (azodicarbonamide), OT/OBSH (sulfonyl hydracid), NaHCO₃ (sodium bicarbonate), or by the above-mentioned physical means such as the microspheres filled with solvent (e.g. known by tradenames such as Expancel^{®}).

The first material thus produced can provide the sealing lip with the above flexural Young Modulus from 100 MPa to 12,000 MPa, which is unusual high in the field of automotive sealings. However, it has been shown that the use of this material achieves very good sealing performance and is able to reduce noises at low costs.

In some cases, the first material can be reinforced by a reinforcing agent such as glass fibers, glass beads, talc, wood fibers, hemp, flax, etc.

A preferred material for the automotive sealing lip is polypropylene (PP) with talc in a range from 20 % to 40 %, which leads to a flexural Young Modulus from 1800 to 2500, for example.

In another preferred embodiment, the lip body section of the sealing lip has a total body area in a cross-sectional view, wherein the first material has a partial body area in the cross-sectional, and wherein a ratio of the partial body area to the total body area is in a range from 5 % to 100 %, particularly in a range from 50 % to 100 %, particularly preferred in a range from 75 % to 100 %.

In other words, although it is preferred that the entire lip body section is made from the first material (ratio 100%), it is also possible to use the first material more or less as a "spine" in the lip body section so as to provide the lip body section with the required material properties (ratio < 100%). In the latter case, the remaining material of the lip body section may be TPE, for example.

In a particularly preferred embodiment, the sealing lip comprises a lip contact section connected to or being part of the lip body section, for establishing the sealing line between the sealing lip and a surface of the sliding element.

The lip contact section can be semi-circular in cross-section, having a radius which corresponds to the thickness of the lip body section.

It is preferred if the lip contact section has a radius in a range from 0.4 mm to 2.5 mm. In this case, it is preferred if the lip body section has a corresponding thickness of 0.8 mm to 5 mm.

Further, it is preferred if at least the lip contact section of the sealing lip is provided with a slippery material such as flocking, and/or a sprayed coating and/or a co-extruded coating.

The slippery material reduces the sliding (friction) resistance between the sealing lip and the surface of the sliding window.

The slippery material can be a flocked nylon pile or a flock polyester pile. The slippery material may also improve noise and wiping performance.

The slippery material can be provided on at least a part of the lip contact section only. However, it is preferred if the slippery material is not only provided on at least the part of the lip contact section which faces to the sliding element in the mounted state, but also on a side of the lip body section which faces to the surface of the sliding element. In case that the sliding element makes large movements in the third (transversal) direction, the side of the lip body section may come fully into contact with the surface of the sliding window. In this case, it is preferred if this side of the lip body section is provided with the slippery material as well. Further, if the window is slid down in full, for example below the sealing strand, the sealing lip is not deflected by the window and extends across the nominal path of travel of the sliding window. If the sliding window moves up and comes into contact with the sealing lip, particularly in the area of the side of the lip body section which faces to the window, the slippery material reduces the friction, and the sealing lip will be deflected so as to establish the acute lip angle which is preferably in the range from 2.5° to 25°, as explained above.

Further, it is preferred if the lip contact section is formed so as to create a width of the sealing line in a second direction which is essentially perpendicular to the first direction, wherein the first and second directions being essentially parallel to the surface of the sliding element, and wherein the sealing line width is preferably smaller than 2.5 mm, particularly smaller than 2.0 mm, and particularly preferred smaller than 1.5 mm.

Typically, the sealing line width is larger than 0.5 mm, particularly larger than 0.8 mm, particularly larger than 1 mm.

Due to the small sealing line width, the sliding resistance can be further decreased while keeping the same compression force, noise can be improved and wiping performance can be maintained.

The sealing line width may correspond to the value of the radius of the lip contact section and originates from the force with which the lip contact section is pressed against the sliding window due to elastic deformation forces of the hinge section.

In this connection, it is preferred, as explained in detail below, if the so-called compression force to the surface of the sliding window at a nominal position of the sliding window in a third direction is in a range from 0.5 N/dm to 20 N/dm.

In the disclosed sealing strand, it is preferred if the sealing lip further comprises a connection section connected to the mounting portion, and a hinge section connected to the connection section.

The hinge section is preferably made from a material which is different from the first material. The hinge section is the section of the sealing lip which is deformed elastically when the window is in its nominal position in the third direction.

It is preferred if the mounting portion has a carrier section extending essentially in the second direction in a cross-sectional view, wherein the connection section of the sealing lip is connected to the carrier section.

The connection section may extend in the third direction by a certain extension amount which can be zero in which case the connection section virtually does not exist, or can be larger than zero as is explained below.

The connection section may be made from the same material (i.e the first material) as the lip body section. Further, the lip contact section may be made from the first material as well.

As explained above, those sections may be made from the first material in full, or may include a part of the first material as a "spine" in order to provide the necessary stiffness.

Particularly, it is preferred if the hinge section of the sealing lip is made from a second material which is selected from a material of the group which consists of a rubber elastomer material, a thermoplastic elastomer material and a thermoset elastomer material, and which has a traction Young Modulus in a range from 8 MPa to 25 MPa, preferably in a range from 15 MPa to 20 MPa.

The traction Young Modulus of the second material is determined under the standard ISO 527.

The second material is a quite elastic material which can accommodate the deflection of the lip body section with respect to the connection section and provide the necessary compression force to the surface of the sliding window.

In this respect, it is particularly preferred if the rubber elastomer or thermoplastic or thermosetting elastomer material forming the second material is selected from the group of materials consisting of ethylene propylene diene monomer (EPDM), TPE-V, TPE-S, TPE-O, TPE-E, TPE-U, TPE-A, PVC, or others known by trade names such as Santoprene^{®}, Tefablock^{®}, and Fortrex^{®} .

These materials are particularly suitable for constituting the hinge section.

Further, it is preferred if the connection section of the sealing lip extends from the carrier section of the mounting portion in a third direction which is aligned transverse with respect to the first and second directions, wherein it is preferred if the connection section of the sealing lip extends from the carrier section of the mounting portion in the third direction by a connection section extension amount which is equal to or larger than zero, and which is preferably in a range from 3 mm to 10 mm.

As indicated above, the connection section extension amount may be zero in which case the connection section virtually does not exist. On the other hand, the connection section may be used to establish a certain distance between the carrier section and the hinge section so as to facilitate installation of the sealing strand in the window frame portion.

Further, it is preferred if the connection section of the sealing lip is formed integrally with the carrier section of the mounting portion.

Particularly, it is preferred if at least the carrier section of the mounting portion, the connection section and the lip body section of the sealing lip are made from the same material, particularly the first material as defined above.

In this case, it is preferred if only the hinge section of the sealing lip is made from the second material, and the rest of the sealing strand is made from the first material.

In addition thereto, however, the mounting portion may include elastic portions like gripping lips or carrier lips in order to facilitate mounting of the mounting portion on the frame portion.

As explained above, it is therefore preferred if the mounting portion is mainly made from the first material.

Further, it is preferred if the mounting portion has a base section extending in a third direction which is aligned transverse with respect to the first and second directions, and is connected to the carrier section on a first end thereof.

In this case it is further preferred if the mounting portion has a gripping section extending in the second direction and being connected to a second end of the base section, wherein the gripping section, the base section, and the carrier section form a U-shaped frame portion receptacle for receiving the frame portion.

With the so defined U-shaped frame portion receptacle, it is quite easy to mount the mounted portion to the frame portion.

Further, it is preferred if the sealing portion of the sealing strand is configured so that the lip body section exerts a so-called compression force to the surface of the sliding window at a nominal position of the sliding window in a third direction in a range from 0.5 N/dm to 20 N/dm, particularly in a range from 3 N/dm to 8 N/dm.

The combination of this compression force value with the material properties of the first material of the lip body section and of the second material of the hinge section of the sealing lip provide superior noise reduction and sealing performance at comparably low costs.

The compression force is a parameter which is measured as follows: a portion of the sealing strand is cut off at a certain measurement length in the first direction, which is in our case 100 mm in the first direction so as to provide a sealing strand portion with a length of 100 mm. This sealing strand portion is placed into a measurement unit in which the sealing strand portion is held at its mounting portion and which deflects the sealing lips of the sealing strand by a certain deflection amount in the third direction, which is in our case 6.3 mm (0.063 dm). Subsequently, the force is measured which is necessary to achieve this deflection amount. This force is the so-called compression force which is measured in N/dm. For example, this corresponds to a force of 7.0 N which the sealing lip exerts on the measurement unit (i.e. a surface of the measurement unit which corresponds to the inner surface of the window in the mounted state) when the sealing lip is deflected by 6.3 mm. In other words, the compression force is in this case 7N/dm at 6.3 mm deflection.

It will be understood that the afore-mentioned features and those to be described hereinafter cannot only be used in the respectively given combination, but also in different combinations or independently, without leaving the scope of the present invention.

### BRIEF DESCRIPTION OF THE DRAWINGS

Further features and advantages of the invention can be taken from the subsequent description of preferred embodiments with reference to the drawings. In the drawings show:
- Fig. 1: is a partial side view of a vehicle including a door and a sliding window, wherein a waistline sealing strand seals a gap between the window and the door;
- Fig. 2: is a cross sectional view II-II in Fig. 1 and shows an embodiment of a sealing arrangement including a waistline sealing strand in a first transversal position of the window;
- Fig. 3: is a view similar to Fig. 2 and is a cross sectional view II-II in Fig. 1 and shows the waistline sealing strand in a second transversal position of the window;
- Fig. 4: an enlarged sectional view of an exemplary sealing lip;
- Fig. 5: a sectional view of a sealing lip;
- Fig 6(a) to 6(c): three different variants of sealing lips.

### EMBODIMENTS

In the following, embodiments of the present disclosure are described in detail.

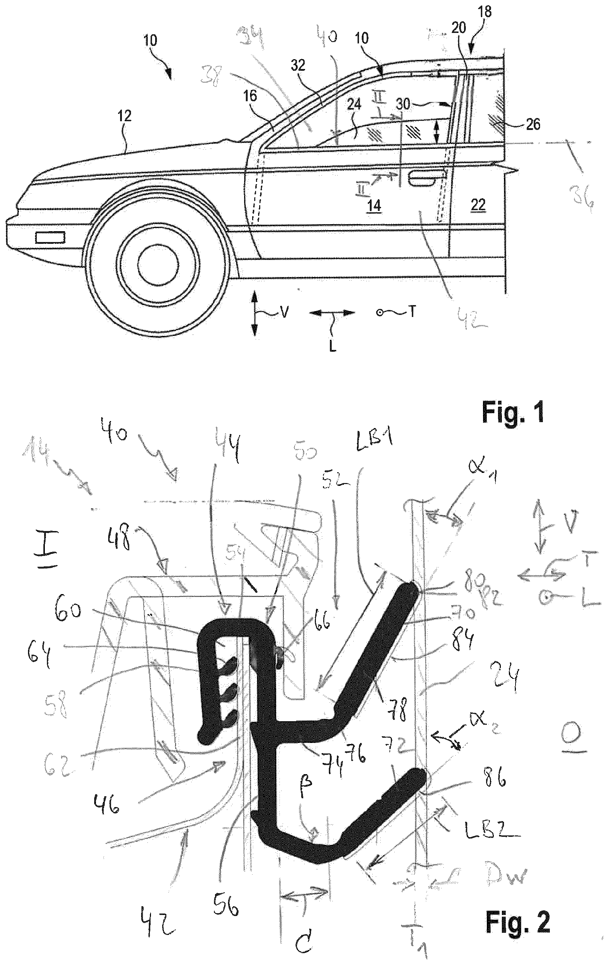

A vehicle like an automobile passenger car is schematically shown in Fig. 1 and generally denoted by 10. The vehicle 10 has a body 12, to which is hingedly connected a front door 14. The front door 14 extends essentially between a A-pillar region 16 and a B-pillar region 18. In the area of the B-pillar region 18, the vehicle includes an applique arrangement which is preferably attached to the body 12.

Further, the vehicle 10 includes a rear door 22 hingedly connected to the body 12.

The front door 14 includes a front door sliding window 24, which forms a moveable structure. The rear door 22 includes a rear door window 26, which may be a sliding window as well.

The front door sliding window 24 is sealed against the front door 14 and/or the body 12 by means of a sealing assembly not denoted in detail in Fig. 1. The sealing assembly, however, includes an upright B-pillar sealing arrangement 30 which seals the rear edge of the front door sliding window 24 against the B-pillar region 18 and/or the applique arrangement 20.

A similar sealing arrangement 30 may be located in the area of the front edge of the rear door window 26 and/or at other front or rear edges of windows of the vehicle. An upper edge of the respective windows is preferably sealed by a header sealing profile which is shown schematically in Fig. 1 at 32. Further, in Fig. 1, the front door sliding window 24 has slid half downwards, so as to expose a window opening 34.

A lower edge of an window frame 38 of the door 14 is sealed by means of a waist line sealing arrangement 40 which is aligned essentially in parallel to a waist line 36 of the vehicle. The waist line sealing arrangement 40 includes an inner waist line sealing and an outer waist line sealing.

The body 12 defines a first direction L, which is preferably a longitudinal direction of the vehicle 10. Further, the body 12 defines a second direction V which is preferably a vertical direction of the vehicle 10. In addition, the body 12 defines a third direction T, which is preferably a transverse direction of the vehicle 10. The three directions are also used to describe a sealing arrangement. The three directions L, V, T are preferably essentially orthogonal to each other, but may be arranged under different angles to each other, as long as the three directions are not parallel. The three directions L, V, T are shown schematically in Fig. 1 and in Fig. 2.

Preferably, the outer surface of the front door sliding window 24 and/or the rear door window 26 is formed flush with an outer surface of the applique arrangement 20. To this purpose, the front door window 24 and/or the rear door window 26 are preferably guided by means of sliding guides structures which are arranged on the inside of the respective window. Preferably, guide shoes or the like (not shown in the Figures) are fastened to the inner surface of the respective window 24, 26, which guide shoes are guided by guide rails (not shown in the Figures) arranged on the inside of the respective window 24, 26 and attached to door bodywork (not shown in Fig. 1).

In another embodiment, at least the front door window 24 may be guided only by guide structures below a waste line of the vehicle 10, namely in a frameless door structure.

Fig. 2 shows a part of a waist line sealing arrangement 40 in the area of the waist line 36 in a cross-section along a plane II-II in Fig. 1. The sealing arrangement part shown in Fig. 2 is an inner waist line sealing formed by a sealing strand 44 mounted to a frame portion 46 of a door bodywork 42 of the front door 14. The sealing strand seals against an inner surface of the sliding window 24. A thickness T of the window 24 is not shown to scale in Fig. 2.

Fig. 2 shows a cross-section of the door body work 42, which is typically a metal structure. The sealing strand 44 of the waist line sealing arrangement 40 is mounted to a frame portion 46 of the door body work 42, which extends essentially in the second direction V. The front door 14 includes a covering portion 48 which covers the frame portion 46 on the inside I of the front door 14, which corresponds to the vehicle passenger compartment side of the sliding window 24. The outside of the sliding window 24 is shown at O in Fig. 2.

A gap is provided between the inner surface of the sliding window 24 and an outer portion of the covering portion 48.

Although the present embodiment is directed to an inner waist line sealing, the general concept of the sealing arrangement can be provided for an outer waist line sealing as well, or for other purposes. Further, the present disclosure is not restricted to a sliding window, but could be used for providing a sealing against any other sliding element which can be transparent or opaque.

The sealing strand 44 includes a mounting portion 50 and a sealing portion 52.

The mounting portion 50 comprises a base section 54 which extends in the cross-sectional view of Fig. 2 essentially in the third direction T.

The mounting portion 50, further, includes a gripping section 58 which is connected to an inside edge of the base section 54 and extends essentially downwardly in the second direction V.

In addition, the mounting portion 50 includes a carrier section 56 which is connected to an outer edge of the base section 54 and extends downwardly in the second direction V.

The base section 54, the carrier section 56, and the gripping section 58 define a U-shaped frame portion receptacle 60 for receiving the frame portion 46, particularly an upright section 62 of the frame portion 46 of the door body work 42.

At the inside of the U-shaped frame portion receptacle 60, gripping lips 64 may be optionally provided. The gripping lips 64 are preferably formed from another material than the U-shaped frame portion 64, particularly a material which is softer or more elastic than the material of the base, carrier, and gripping sections 54, 56, 58 of the mounting portion 50. The gripping lips 64 may contribute to improving the mounting performance, particularly with respect to vibration noises and the like.

In addition, on the outside of the U-shaped frame portion receptacle 60, one or more carrier lips 66 can be provided in order to assist in improving the mounting performance. The carrier lip(s) preferably rest against a section of the covering portion 48.

The sealing portion 52 of the sealing strand 44 includes a first sealing lip 70 and a second sealing lip 72, which are aligned in the second direction V.

Each of the first and second sealing lips 70, 72 includes a connection section 74, a hinge section 76, a lip body section 78, and a lip contact section 80.

Each connection section 74 is connected to the carrier section 56 of the mounting portion 50, and extends essentially in the third direction T, particularly to the outside O.

The hinge section 76 is connected to the free end of the connection section 74. The lip body section 78 is connected to the outer end of the hinge section 76. The lip contact section 80 is connected to the outer end of the lip body section 78 or forms an outer end part thereof.

As can be seen in Fig. 2, the connection section of the first sealing lip 70 extends in a direction perpendicular to the extension direction of the carrier section, i.e. in the third direction T.

The connection section 74 of the second sealing lip 72 extends downwardly at an angle β against the third direction T. The connection angle β can be in a range from 0° ≤ β ≤ 40°.

The connection sections 74 of the first and second sealing lips 70, 72 extend essentially in the third direction T by a connection section extension amount C. The extension amount C can be zero. In this case, the connection section 74 of the respective sealing lip 70, 72 does not exist, so that the sealing lip is composed only of the hinge section 76 (which is in this case directly connected to the carrier section 56), the lip body section 78, and the lip contact section 80.

On the other hand, the extension amount C is preferably smaller than 20 mm, particularly smaller than 10 mm. Preferably, the extension amount C is in a range from 3 mm to 10 mm.

The lip body section 78 and the lip contact section 80 are preferably made from one and the same material, preferably a first material which is selected from one of a rubber elastomer and a thermoplastic elastomer, the first material having a flexural Young Modulus from 100 MPa to 12,000 Mpa (according to ISO 178).

Particularly, the first material is a material selected from the group consisting of: ethylene propylene diene monomer (EPDM), polyacetal (POM), polyamide (PP), polytetrafluoroethylene (PTFE), ultrahigh-molecular-weight polyethylene (UHMWPE), polypropylene (PP), polyolefin, polyvinyl chloride (PVC), polycarbonate (PC), styrene based materials, particularly SAN, ASA, ABS, PS, polyurethane (PUR), polymethyl methacrylate (PMMA), polybutylene terephthalate (PBT), and acrylonitrile styrene acrylate (ASA).

The first material is preferably a foamed material and may be reinforced by a reinforcing agent such as glass fibers, glass beads, talc, wood fibers, hemp, flax, etc.

Due to the high flexural Young Modulus of the first material it can be ensured that the lip body section 78 of the sealing lips 70, 72 has a high stiffness, particularly a stiffness against bending around an axis which is parallel to the longitudinal direction L.

The first material, preferably, is a polypropylene (PP) to which some reinforcement agent is added, such as talc at a percentage by weight of 15 % to 40 %.

Particularly, talcum can be included at a range from 25 to 35 percent by weight.

It is preferred if the entire lip body section 78 is formed by the first material. As will be explained below, the lip body section 78 may instead be provided in the lip body section in such an amount that a ratio of the partial body area (in cross-sectional view) to the total body area of the lip body section is in a range from 5 % to 100 %, particularly in a range from 50 % to 100 %, particularly preferred in a range from 75 % to 100 %.

Further, it is preferred if the lip contact section 80 is also formed by the first material.

In addition, it is particularly preferred if the connection section 74 is also formed by the first material.

Furthermore, it can be provided that at least one of the base section 54, the carrier section 56, and the gripping section 58 of the mounting portion 50 is/are formed from the first material.

On the other hand, the hinge portion 76 which connects the connection section 74 and the lip body section 78, is preferably formed from a second material. The second material is selected from a material of the group which consists of a rubber elastomer material, a thermoplastic elastomer material, and a thermoset elastomer material. The second material preferably has a traction Young Modulus in a range from 8 Mpa to 25 Mpa, preferably in a range from 15 Mpa to 20 Mpa (Standard ISO 527).

Preferably, the rubber elastomer, thermoplastic or thermosetting elastomer material which forms the second material is selected from the group of materials consisting of ethylene propylene diene monomer (EPDM), TPE-V, TPE-S, TPE-O, TPE-E, TPE-U, TPE-A, PVC, or others known by trade names such as Santoprene^{®}, Tefablock^{®}, and Fortrex^{®} .

The second material of the hinge portion 76 has a higher elasticity than the first material and is less stiff than the first material.

In Fig. 2, the sealing lips 70, 72 are shown in a non-deflected state. The hinge section 76 of the first sealing lip 70 is formed such that the lip body section 78 of the first sealing lip 70, which is formed essentially as a straight section, extends under an acute lip angle α₁ of 5° to 55° against the second vertical direction V.

As can be seen in Fig. 2, the lip angle α₁ of the first sealing lip 70 is approximately 27°. On the other hand, the acute lip angle α₂ of the second sealing lip 72 is larger than the lip angle of the first sealing lip 70 and is approximately 45°.

The first sealing lip 70 has a body length LB1 in the range from 7 mm to 40 mm.

An average body thickness D_{T} of each of the first and second sealing lips 70, 72 is in the range from 0.75 mm to 5 mm, preferably in the range from 1 mm to 3 mm.

The second sealing lip 72 has a second body length LB2 which is shorter than the first body length LB1 of the first sealing lip 70.

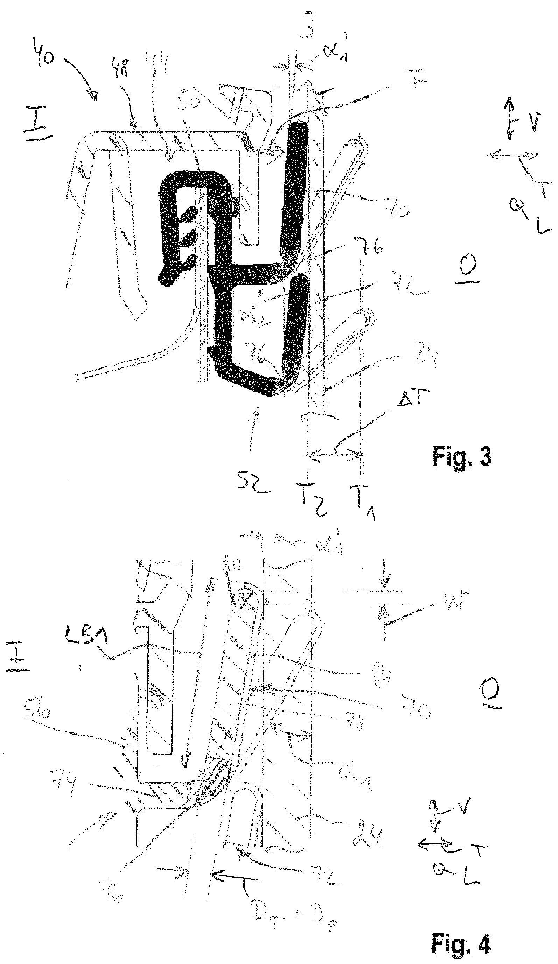

The lip contact sections 80 of the first and second sealing lips 70, 72 are each approximately semi-circular in the cross-section, with a radius (cf. Fig. 4) in a range from 0.4 mm to 2.5 mm.

Further, a side of the lip contact section 80 which faces to the sliding window 24, and preferably also a side of the lip body section 78 of each of the sealing lips 70, 72 which faces the sliding window 24 are applied with a slippery material, such as a flocking, a sprayed coating or a co-extruded coating.

In Fig. 2, the slippery material of the first sealing lip 70 is shown as a first flocking84. The corresponding flockingcof the second sealing lip 72 is shown at 86.

Fig. 2 shows that the window 24 has a thickness in the third direction T of D_{W}. Furthermore, an inner surface of the window 24 has a transversal position T₁ in Fig. 2.

It is noted in this context that the window 24 is not shown to scale in Fig. 2 with respect to its thickness. Further, it is to be noted that the window 24 is a sliding window which moves in the second vertical direction V. If the window 24 is completely moved downward into the door (i.e. below the waist line 36), the sealing lips 70, 72 may have a state as shown in Fig. 2, i.e. a non-deflected state.

If the window 24 is closed, each of the sealing lips 70, 72 are pressed elastically against the inner surface of the window 24, due to an elastic deformation of the hinge sections 76 of the two sealing lips 70, 72.

In addition, it is to be noted that the window 24 may change its position in the transversal direction T due to pressure differences between the inside and the outside or due to other circumstances.

The position of the inner surface of the window 24 in Fig. 2 is shown at T₁ which is a maximum outermost position of the window 24 in its closed state.

Fig. 3 shows a cross-sectional view similar to Fig. 2, wherein the position of the window 24 in the third direction T is in its nominal position. It can be seen that the sealing lips 70, 72 have been deflected from the state shown in Fig. 2 due to a deformation of the respective hinge sections 76. In the state shown in Fig. 3, the inner surface of the window 24 is shown at a position T₂ which is the nominal position of the window. Typically, the nominal position corresponds more or less to a maximum innermost position of the window 24.

In the state shown in Fig. 3, the acute lip angle of the first sealing lip is shown at α₁' which is in a range from 2.5° to 25°, preferably in a range of 15° ± 5° at the nominal glass position in the third direction T.

Similarly, the second sealing lip 72 is deflected against the vertical direction V at an acute lip angle α₂', which is typically also in the range from 2.5° to 25°. Preferably, the lip angles α₁ and α₂ are approximately the same. This is preferably due to the fact that the combination of the angles α₂ and β corresponds to the angle α₁ in Fig. 2.

Fig. 4 shows an enlarged sectional view of an exemplary sealing lip 70.

It can be seen that the sealing lip 70 of Fig. 4 corresponds essentially to the sealing lip 70 of the embodiment of Figs. 2 and 3. Furthermore, it can be seen that the lip contact section 80 has a radius R of approximately 0.4 mm to 2.5 mm, corresponding approximately to half of the average body thickness D_{T} of the lip body section 78.

Due to the geometric parameters of the sealing strand 44 and due to the materials selected for the individual sections of the sealing strand 44, the sealing lips 70, 72 are pressed against the inner surface of the window 24 at a force F, as shown schematically in Fig. 3 for the first sealing lip 70.

Together with the respective slippery material (flocking 84 in case of the first sealing lip 70), a sealing line which is defined between the respective sealing lip and the inner surface of the window 24 and which extends essentially in the first longitudinal direction L, has a width W in the second (vertical) direction, as shown in Fig. 4.

The sealing line width W is preferably smaller than 2.5 mm, particularly smaller than 2.0 mm and particularly preferred smaller than 1.5 mm.

Overall, what is achieved is that the sealing portion of the sealing strand is configured so as to provide the lip body section with a compression force (F) to the surface of the sliding window (24) at a nominal position of the sliding window 24 in the third direction T, wherein the compression force is in a range from 0.5 N/dm to 20 N/dm, preferably in a range from 3 N/dm to 8 N/dm.

The combination of this compression force ranges, the small width W of the sealing line, and preferably in combination with the flocking84, 86, the sealing lip as such and the sealing strand equipped with the sealing lip, provide excellent noise suppression and excellent sealing properties. The present disclosure teaches to use a hard thermoplastic material (e.g. PP or ABS), which is considered in most of the cases as a structural material (non-functional), as the material of the lip body section of a sealing lips 70,72. The hinge section of the sealing lip remains to be a functional material which allows to let the lip body section deflect around a hinge axis defined by the hinge and extending parallel to the longitudinal direction L.

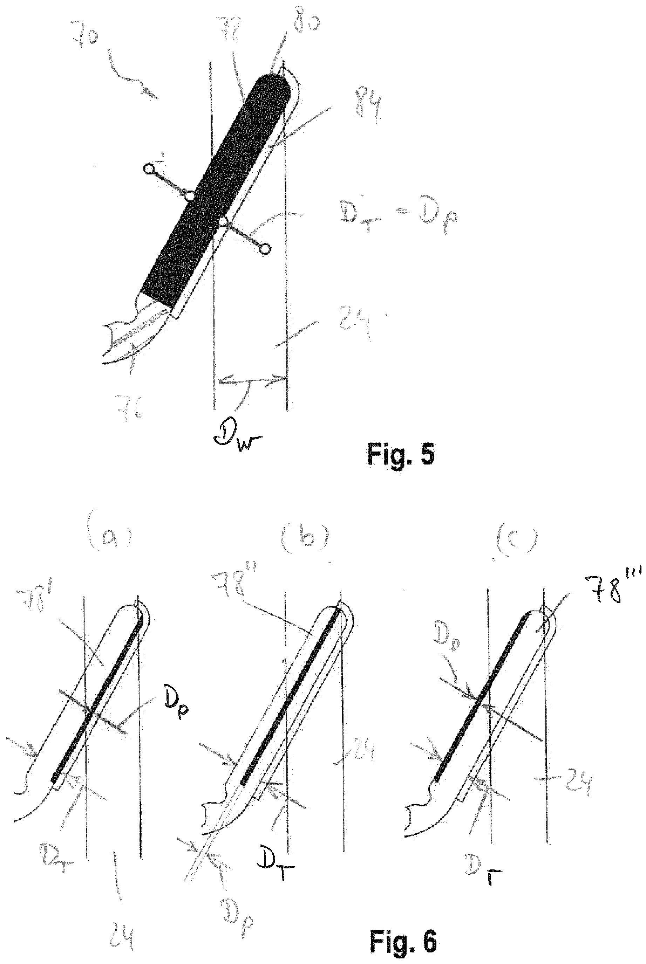

The sealing strand 44 can be provided at low costs. Fig. 5 shows a sealing lip 70 in a non-deflected state, wherein the entire lip body section 78, and integrally herewith the lip contact section 80, are entirely formed from the first material.

Fig. 6 shows three different variants (a), (b), and (c).

In each of the cases the lip body section 78 has a certain total body area in the cross-sectional view shown in Fig. 6. On the other hand, only a part of the total body area is formed by the first material in each of the cases of Fig. 6. In each of those cases, the first material provides a partial body area in the cross-sectional view, wherein a ratio of the partial body area to the total body area is in a range from 5 % to 100 %, particularly in a range from 50 % to 100 %, particularly preferred in a range from 75 % to 100 %, in each case inclusive.

In Fig. 6(a), the first material forms the outer surface of the lip body section 78' and extends into the lip body section 78' by a depth D_{P}, which is the thickness of the high flexural modulus section. In Fig. 6(a), the ratio of the partial body area to the total body area is approximately 1:2.5 to 1:6 (40% to 17%)

In Fig. 6(b), the high flexural modulus section has a thickness D_{P} and is arranged in a middle portion of the thickness D_{T} of the lip body section 78".

Finally, in Fig. 6(c), the high flexural modulus section which is formed of the first material, is present at the inner surface of the lip body section 78 and extends by a depth D_{P} into the lip body section 78‴. D_{P} corresponds again to the thickness of the high flexural module section D_{P}.

The ratio of partial body area to total body area is in each of the cases of Figs. 6(a) to 6(c) approximately identical. In each of those cases, the high flexural modulus section forms a type of "spine" for the lip body section 78 so as to provide a high stiffness for the entire lip body section 78.

### Reference Numerals:

- 10: vehicle
- 12: body
- 14: front door
- 16: A-pillar region
- 18: B-pillar region
- 20: applique arrangement
- 22: rear door
- 24: front door sliding window (moveable structure)
- 26: rear door window

- 30: upright B-pillar sealing arrangement
- 32: header sealing arrangement
- 34: window opening
- 36: waist line (waist belt)
- 38: window frame
- 40: waist line sealing arrangement
- 42: door bodywork
- 44: sealing strand
- 46: frame portion (42)
- 48: covering portion
- 50: mounting portion
- 52: sealing portion
- 54: base section
- 56: carrier section
- 58: gripping section
- 60: U-shaped frame portion receptacle
- 62: Upright section (46)
- 64: gripping lips
- 66: carrier lip(s)
- 70: first sealing lip
- 72: second sealing lip
- 74: connection section
- 76: hinge section
- 78: lip body section
- 80: lip contact section
- 82: sealing line
- 84: first anti-friction slippery material (e.g. flocking or coating)
- 86: second anti-friction slippery material (e.g. flocking or coating)

- L: first direction
- V: second direction
- T: third direction
- I: inside
- O: outside
- C: connection section extension amount
- D_{W}: thickness window
- D_{T}: thickness of sealing lip body section
- R: radius of lip contact section
- D_{P}: thickness of high flexural modulus section
- F: force in third direction
- W: width of sealing line
- T₁: maximum outermost position of inner window surface in third direction
- T₂: nominal position of inner window surface in third direction
- ΔT: Difference between T1 and T2

- LB1: first body length
- LB2: second body length
- α₁: first lip angle
- α₂: second lip angle
- β: connection angle

## Claims

1. An automotive sealing lip (70;72) for a sealing strand (44), the sealing lip (70;72) for providing a sealing line (82) extending in a first direction (L) against a sliding element (24) such as a sliding window,
the sealing lip (70;72) being configured to be elastically pressed against the sliding element (24),
the sealing lip (70;72) having a lip body section (78) which is configured to be oriented with respect to a surface of the sliding element (24) at an acute lip angle (α), and
the lip body section (78) of the sealing lip (70;72) comprising a first material selected from one of a rubber elastomer or a thermoplastic elastomer, the first material having a flexural Young modulus from 100 MPa to 12,000 MPa.

2. The automotive sealing lip of claim 1, wherein the lip body section (78)
- has a body length (M) in the range from 7 mm to 40 mm, and/or
- has an average body thickness (D_{T}) in the range from 0.8 mm to 5 mm,
and/or
- is formed as an essentially straight section.

3. The automotive sealing lip of claim 1 or 2, wherein the first material is a material selected from the group consisting of: ethylene propylene diene monomer (EPDM), polyacetal (POM), polyamide (PP), polytetrafluoroethylene (PTFE), ultrahigh-molecular-weight polyethylene (UHMWPE), polypropylene (PP), polyolefin, polyvinyl chloride (PVC), polycarbonate (PC), styrene based materials, particularly SAN, ASA, ABS, PS, polyurethane (PUR), polymethyl methacrylate (PMMA), polybutylene terephthalate (PBT), and acrylonitrile styrene acrylate (ASA).

4. The automotive sealing lip of any one of claims 1 to 3, wherein the first material
- is a foamed material, and/or
- includes microspheres, and/or
- is reinforced by a reinforcing agent such as glass fibers, glass beads, talc, wood fibers, hemp, flax, etc..

5. The automotive sealing lip of any one of claims 1 to 4, wherein the lip body section (78) of the sealing lip (70;72) has a total body area in a cross-sectional view, wherein the first material has a partial body area in the cross sectional view, and wherein a ratio of the partial body area to the total body area is an a range from 5% to 100%, particularly in a range from 50% to 100%, particularly preferred in a range from 75% to 100%.

6. The automotive sealing lip of any one of claims 1 to 5, wherein the sealing lip (70;72) comprises a lip contact section (80) connected to or being part of the lip body section (78), for establishing the sealing line (82) between the sealing lip (70;72) and a surface of the sliding element (24).

7. The automotive sealing lip of claim 6, wherein the lip contact section (80)
- has a radius in a range from 0.4 mm to 2.5 mm, and/or
- has a slippery material (84;86) such as a flocking, and/or a sprayed coating and/or a co-extruded coating, and/or
- is formed so as to create a width (W) of the sealing line (82) in a second direction (V) which is essentially perpendicular to the first direction (L), the first and second directions (L,V) being essentially parallel to the surface of the sliding element (24), and wherein the sealing line width (W) is preferably smaller than 2.5 mm, particularly smaller than 2.0 mm, and particularly preferred smaller than 1.5 mm.

8. A sealing strand (44) for sealing a sliding window (24) against a window frame (38), the sealing strand (44) extending along a first direction (L) and defining a second direction (V) which is essentially perpendicular to the first direction (L), the first and second directions (V,L) being essentially parallel to a window plane of the sliding window (24) when the sealing strand (44) is mounted to the window frame (38), the sealing strand (44) comprising
- a mounting portion (50) for mounting the sealing strand (44) to a frame portion (46) of the window frame (38), and
- a sealing portion (52) which comprises at least one sealing lip (70;72) of any one of claims 1 to 7.

9. The sealing strand of claim 8, wherein the sealing lip (70;72) further comprises a connection section (74) connected to the mounting portion (50), and a hinge section (76) connected to the connection section (74).

10. The sealing strand of claim 9, wherein the mounting portion (50) has a carrier section (56) extending essentially in the second direction (V) in a cross sectional view, wherein the connection section (74) of the sealing lip (70;72) is connected to the carrier section (56).

11. The sealing strand of any of claims 8 to 10, wherein a hinge section (76) of the sealing lip (70;72) is made from a second material which is selected from a material of the group which consists of a rubber elastomer material, a thermoplastic elastomer material and a thermoset elastomer material, and which has a traction Young Modulus in a range from 8 MPa to 25 MPa, preferably in a range from 15 MPa to 20 MPa.

12. The sealing strand of claim 11, wherein the rubber elastomer, thermoplastic or thermosetting elastomer material forming the second material is selected from the group of materials consisting of ethylene propylene diene monomer (EPDM), TPE-V, TPE-S, TPE-O, TPE-E, TPE-U, TPE-A, PVC, or others known by trade names such as Santoprene^{®}, Tefablock^{®}, and Fortrex^{®}.

13. The sealing strand of any one of claims 8 to 12, wherein
- the connection section (74) of the sealing lip (70;72) extends from the carrier section (56) of the mounting portion (50) in a third direction (T) which is aligned transverse with respect to the first and second directions (L,V), wherein it is preferred if the connection section (74) of the sealing lip (70;72) extends from the carrier section (56) of the mounting portion (50) in the third direction (T) by a connection section extension amount (C) which is equal to or larger than zero, and which is preferably in a range from 3 mm to 10 mm, and/or wherein
- wherein the connection section (74) of the sealing lip (70;72) is formed integrally with the carrier section (56) of the mounting portion (50).

14. The sealing strand of any one of claims 8 to 13, wherein the mounting portion (50)
- is mainly made from the first material, and/or
- has a base section (54) extending in a third direction (T) which is aligned transverse with respect to the first and second directions (L,V), and is connected to the carrier section (56) on a first end thereof, wherein it is preferred if the mounting portion (50) has a gripping section (58) extending in the second direction (V) and being connected to a second end of the base section (54), wherein the gripping section (58), the base section (54), and the carrier section (56) form a U-shaped frame portion receptacle (60) for receiving the frame portion (46).

15. The sealing strand of any one of claims 8 to 14, wherein
- the sealing portion (52) of the sealing strand (44) is configured so that the lip body section (78) exerts a compression force (F) to the surface of the sliding window (24) at a nominal position of the sliding window (24) in a third direction (T), the compression force (F) being in a range from 0.5 N/dm to 20 N/dm, preferably in a range from 3 N/dm to 8 N/dm.
